# EUROPEAN PATENT SPECIFICATION

(11) **EP 3 923 254 B1**
(45) Date of publication and mention of the grant of the patent: **28.05.2025**
(21) Application number: 21178759.3
(22) Date of filing: 10.06.2021
(51) Int. Cl.: G07F 19/00, G07D 11/12, G07D 11/14, G07D 11/245, G07F 5/24

(54) **MONEY HANDLING APPARATUS AND MONEY HANDLING SYSTEM**
GELDHANDHABUNGSVORRICHTUNG UND GELDHANDHABUNGSSYSTEM
APPAREIL ET SYSTÈME DE MANIPULATION D'ARGENT

(30) Priority: 12.06.2020 JP 2020102512
(43) Date of publication of application: 15.12.2021
(73) Proprietor: GLORY LTD., Himeji-shi Hyogo 670-8567 (JP)
(72) Inventor: OOTA, Yoshikatsu, Hyogo, 670-8567 (JP)
(74) Representative: SSM Sandmair

(56) References cited:
- EP-A1- 1 008 965
- EP-A1- 3 644 285
- US-A1- 2014 083 814

## Description

### Technical Field

The present disclosure relates to a money handling apparatus, a money handling system, and a money handling method.

### Background Art

In the related art, there are known apparatuses and systems which deposit proceeds from sales collected from a cash settlement apparatus that performs settlement processing, and which dispense a change fund that is loaded to the cash settlement apparatus (see, for example, Patent Literatures (hereinafter, "Patent Literature" will be referred to as "PTL") 1 and 2).

PTL 1 discloses a cash handling apparatus. This apparatus deposits a coin, which has been collected from a cash settlement apparatus, from a cash transport cassette attached to an upper portion of the cash handling apparatus, and dispenses a coin, with which the cash settlement apparatus is replenished, into a cash transport cassette attached to a lower portion of the cash handling apparatus.

PTL 2 discloses a concurrent handling system of depositing proceeds from sales and dispensing a change fund. Such a system counts collected money, which is collected from a change payment machine and which comprises proceeds from sales for the day, and adjusts a change fund for the succeeding business day, with which the change payment machine is replenished, by a difference between the change fund for the succeeding business day and a deposited amount for the day. This system prepares the change fund for the succeeding business day by appropriating the change fund for the succeeding business day from the collected money for the day and by performing replenishment of a shortage, which cannot be appropriated from the collected money for the day, from a storage unit. Document US 2014/083814 A1 discloses a money processing apparatus allowing deposit and dispensing of money from/into detachable cassettes.

### Citation List

### Patent Literature

PTL 1
   Japanese Patent No. 5902667
PTL 2
   Japanese Patent No. 5000320

### Summary of Invention

Technical Problem

However, PTL 1 describes a coin handling apparatus to which a cash transport cassette is attached at two positions of the coin handling apparatus, but does not disclose a specific operation method of depositing and dispensing using the cash transport cassette. Further, in the technique of PTL 2, the change fund for the succeeding business day is prepared after counting cash collected from the change payment machine and performing predetermined processing so that an operator has to wait during that period and the working efficiency may decrease.

An object of the present disclosure is to provide a money handling apparatus, a money handling system, according to the appended claims that are capable of shortening a waiting time for a change fund to be dispensed.

### Solution to Problem

The invention is defined by the subject-matter of claim 1. The dependent claims relate to preferred embodiments of the invention.

To achieve the above-described object, a money handling apparatus of the present disclosure comprises: a housing; a first cassette attachment unit and a second cassette attachment unit that are provided in the housing; a first transport unit that performs a depositing processing to deposit money from a first cassette, attached to the first cassette attachment unit, into the housing; a second transport unit that performs a dispensing processing to dispense money from the housing as a change fund into a second cassette that is attached to the second cassette attachment unit; and processing circuitry configured to control the first transport unit and control the second transport unit such that the dispensing processing of the change fund is performed before the depositing processing of the money.

In the money handling apparatus of the present disclosure, in a case that a third cassette is attached to the second cassette attachment unit in place of the second cassette while the depositing processing of the money from the first cassette is performed, the processing circuitry controls the first transport unit and the second transport unit such that the dispensing processing of the change fund into the third cassette is performed.

In the money handling apparatus of the present disclosure, the processing circuitry may control the first transport unit and the second transport unit such that the depositing processing of the money from the first cassette starts after the dispensing processing of the change fund into the second cassette and the dispensing processing of the change fund into a third cassette attached to the second cassette attachment unit in place of the second cassette are performed.

In the money handling apparatus of the present disclosure, the processing circuitry may control the second transport unit such that the change fund is dispensed in a money quantity for each denomination that is set in advance.

In the money handling apparatus of the present disclosure, in a case that the processing circuitry receives an increase instruction to increase the change fund to be larger than the money quantity for each denomination set in advance, the processing circuitry may control the second transport unit such that the change fund is dispensed in an amount based on the increase instruction.

In the money handling apparatus of the present disclosure, the money handling apparatus may further comprise identification circuitry configured to identify whether an operator is an authorized person allowed to increase the change fund, and in a case where the operator is identified as the authorized person, the processing circuitry may receive the increase instruction issued by the operator, and in a case where the operator is not identified as the authorized person, the processing circuitry may not receive the increase instruction issued by the operator.

In the money handling apparatus of the present disclosure, the first cassette attached to the first cassette attachment unit and the second cassette attached to the second cassette attachment unit may be each a money transport cassette comprising an opening which opens when the money transport cassette is attached to a specific apparatus, where the money transport cassette is configured to give or receive the money to or from the specific apparatus via the opening.

In the money handling apparatus of the present disclosure, the processing circuitry may control the first transport unit and the second transport unit such that proceeds from sales are deposited into the housing and that the change fund is dispensed into the second cassette, where the proceeds from sales are collected into the first cassette by a first commercial product registration apparatus, and the change fund is used in a second commercial product registration apparatus.

In the money handling apparatus of the present disclosure, the processing circuitry may control the second transport unit such that timing information on a timing of performing the dispensing processing of the change fund before the depositing processing of the money is acquired, and that the dispensing processing of the change fund is performed at the timing based on the timing information.

A money handling system of the present disclosure according to claim 7 comprises: the money handling apparatus described above; and a monitoring apparatus communicably connected to the money handling apparatus. The monitoring apparatus includes: an operation status grasping unit that grasps an operation status of the money handling apparatus; and circuitry configured to determine the timing of performing the dispensing processing of the change fund before the depositing processing of the money, based on the operation status grasped by the operation status grasping unit; and transmit timing information of the timing to the money handling apparatus. The processing circuitry may control the second transport unit such that the dispensing processing of the change fund is performed at the timing based on the timing information transmitted from the circuitry of the monitoring apparatus.

A money handling method comprises: dispensing money from housing of a money handling apparatus as a change fund into a second cassette that is attached to the money handling apparatus; depositing money from a first cassette attached to the money handling apparatus into the housing of the money handling apparatus; and controlling the money handling apparatus to depositing after the dispensing has ended.

In the money handling method of the present disclosure, the money handling method may further comprise dispensing, in a case that a third cassette is attached to the money handling apparatus in place of the second cassette while the money in the first cassette is deposited, the money in the money handling apparatus as the change fund into the third cassette.

In the money handling method the money handling method may further comprise dispensing, in a case that a third cassette is attached to the money handling apparatus in place of the second cassette after the processing of dispensing the change fund into the second cassette ends and before processing of depositing the money in the first cassette starts, the money in the money handling apparatus as the change fund into the third cassette.

In the money handling method the money handling method may further comprise dispensing, in a case where the change fund is dispensed, the change fund in a money quantity for each denomination that is set in advance.

In the money handling method of the present disclosure, the money handling method may further comprise dispensing the change fund in an amount based on an increase instruction when the increase instruction is received from an operator, where the increase instruction is an instruction to increase the change fund to be larger than the money quantity for each denomination set in advance.

In the money handling method the money handling method may further comprise identifying whether the operator is an authorized person allowed to increase the change fund; and dispensing the change fund based on the increase instruction in a case that the operator is identified as the authorized person, and dispensing the change fund not based on the increase instruction in a case that the operator is not identified as the authorized person.

In the money handling method the money handling method may further comprise acquiring timing information on a timing of dispensing the change fund into the second cassette; and dispensing the change fund into the second cassette at the timing based on the timing information.

A money handling apparatus of the present disclosure comprises: a housing; and processing circuitry configured to control a dispensing processing to dispense money from the housing as a change fund into a first cassette that is attached to the money handling apparatus; and control, after the dispensing processing has ended, a depositing processing to deposit money from a second cassette, attached to the money handling apparatus, into the housing.

In the money handling apparatus of the present disclosure, processing circuitry may be configured to control the dispensing processing based on an increase instruction received from an operator, where the increase instruction is an instruction to increase the change fund to be larger than the money quantity for each denomination set in advance.

In the money handling apparatus of the present disclosure, the processing circuitry may be further configured to identify whether the operator is an authorized person allowed to increase the change fund, control the dispense processing based on the increase instruction in a case that the operator is identified as the authorized person, and control the dispense processing not based on the increase instruction in a case that the operator is not identified as the authorized person.

### Advantageous Effects of Invention

According to the money handling apparatus, the money handling system, and the money handling method it is possible to shorten a waiting time for a change fund to be dispensed.

### Brief Description of the Drawings

FIG. 1 is a block diagram illustrating a schematic configuration of a money handling system according to the present disclosure;
FIG. 2A is a top view illustrating a schematic configuration of a coin transport cassette according to the embodiment of the present disclosure;
FIG. 2B is a cross-sectional view taken along IIB-IIB of FIG. 2A according to the present disclosure;
FIG. 3 is a perspective view of an external appearance of a second coin handling apparatus according to the present disclosure;
FIG. 4A is a perspective view illustrating a state in which a cover of the second coin handling apparatus is opened according to the present disclosure;
FIG. 4B is a perspective view illustrating a state in which the coin transport cassette is attached to the second coin handling apparatus according to the present disclosure;
FIG. 5A is a schematic diagram illustrating an internal configuration of the second coin handling apparatus according to the present disclosure when viewed from a right side, illustrating a state when proceeds from sales collected by the coin transport cassette are deposited;
FIG. 5B is a schematic diagram illustrating the internal configuration of the second coin handling apparatus in the state when the proceeds from sales collected by the coin transport cassette are deposited according to the present disclosure, when the second coin handling apparatus is viewed from a front side;
FIG. 6A is a schematic diagram illustrating the internal configuration of the second coin handling apparatus according to the present disclosure when viewed from the right side, illustrating a state when a change fund is dispensed into a drawer;
FIG. 6B is a schematic diagram illustrating the internal configuration of the second coin handling apparatus in the state when the change fund is dispensed into the drawer according to the present disclosure, when the second coin handling apparatus is viewed from the front side;
FIG. 7A is a schematic diagram illustrating the internal configuration of the second coin handling apparatus according to the present disclosure when viewed from the right side, illustrating a state when the change fund is dispensed into the coin transport cassette;
FIG. 7B is a schematic diagram illustrating the internal configuration of the second coin handling apparatus in the state when the change fund is dispensed into the coin transport cassette according to the present disclosure, when the second coin handling apparatus is viewed from the front side;
FIG. 8 is a timing chart illustrating an exemplary specific operation example of a cash handling system according to the present disclosure; and
FIG. 9 is a block diagram of processing circuitry that performs computer-based operations in accordance with the present disclosure.

### Description of Embodiments

### [Embodiment]

Hereinafter, an embodiment of the present disclosure will be described with reference to the accompanying drawings.

### <Configuration of Cash Handling System>

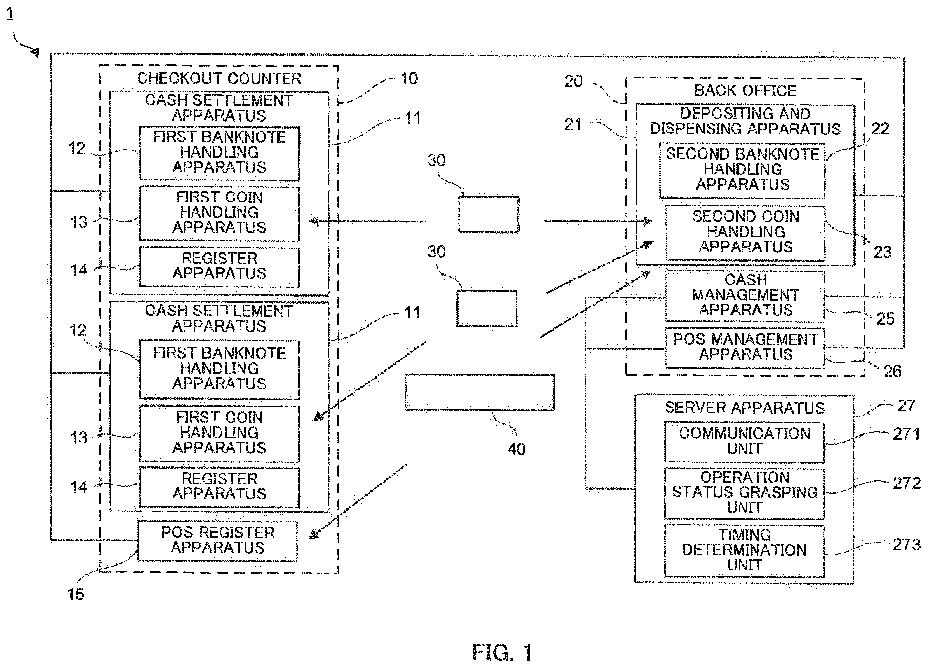

First, a configuration of a cash handling system will be described. In the present embodiment, a front office of a store refers to an area where a cash settlement apparatus whereby a customer settles a commercial product is installed. A back office of a store refers to an area where an apparatus that manages banknotes and coins that are handled by a cash settlement apparatus is installed. Coins represent an example of money. Note that, in the present embodiment, banknotes and coins may be referred to collectively as money. FIG. 1 is a block diagram illustrating a schematic configuration of a cash handling system according to an embodiment of the present disclosure.

A cash handling system 1 illustrated in FIG. 1 is an example of a money handling system. The cash handling system 1 is a system for distribution. The cash handling system 1 comprises a cash settlement apparatus 11, a POS register apparatus 15, a depositing and dispensing apparatus 21, a cash management apparatus 25, a POS management apparatus 26, and a server apparatus 27.

For example, as illustrated in FIG. 1, two cash settlement apparatuses 11, one POS register apparatus 15, one depositing and dispensing apparatus 21, one cash management apparatus 25, and one POS management apparatus 26 are installed in one store. The server apparatus 27 is communicably connected to the cash management apparatuses 25 and the POS management apparatuses 26 of a plurality of stores via the Internet. The server apparatus 27 manages the flow of commercial products and cash in each store. Note that, the number of the cash settlement apparatuses 11 installed in each store, the number of the POS register apparatuses 15 installed therein, the number of the depositing and dispensing apparatuses 21 installed therein, the number of the cash management apparatuses 25 installed therein, and the number of the POS management apparatus 26 installed therein are not limited to the respective numbers indicated in FIG. 1.

The cash settlement apparatuses 11 are installed in a checkout counter 10 that is an example of a front office of a store. The cash settlement apparatus 11 is operated by a clerk, and is used in settlement processing between a clerk and a customer. The cash settlement apparatus 11 deposits payment paid by a customer or dispenses change that is given to a customer. One cash settlement apparatus 11 of the two cash settlement apparatuses 11 is an example of a first commercial product registration apparatus, and the other cash settlement apparatus 11 is an example of a second commercial product registration apparatus.

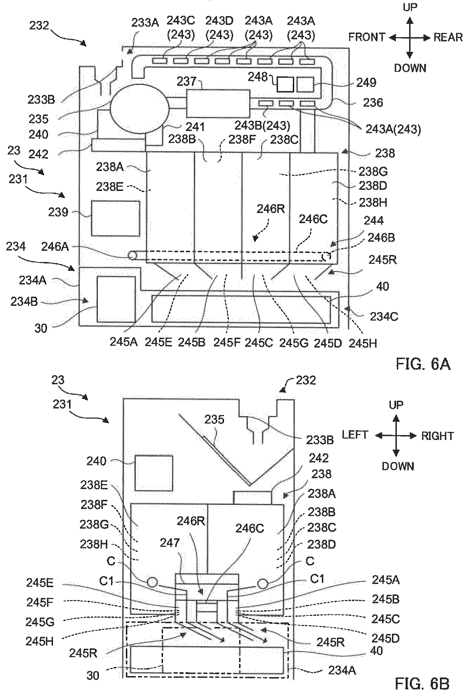

The cash settlement apparatus 11 comprises: a first banknote handling apparatus 12 that handles a banknote, a first coin handling apparatus 13 that handles a coin C (see FIG. 6B), and a register apparatus 14. The first coin handling apparatus 13 of the cash settlement apparatus 11 as an example of the first commercial product registration apparatus is an example of a proceeds-from-sales-collecting apparatus. The first coin handling apparatus 13 of the cash settlement apparatus 11 as an example of the second commercial product registration apparatus is an example of a change apparatus.

The first coin handling apparatus 13 comprises a plurality of storage units that respectively stores the coins C of a plurality of denominations different from each other. The first coin handling apparatus 13 is configured such that a coin transport cassette 30 is attachable to the first coin handling apparatus 13. The first coin handling apparatus 13 stores a change fund in the coin transport cassette 30, in the storage units for each denomination. The first coin handling apparatus 13 stores the coin C inserted by a customer in the storage units for each denomination. In a case where there is change at the time of settlement of a commercial product, the first coin handling apparatus 13 dispenses the coin C in the storage units as the change to a customer. The first coin handling apparatus 13 stores the coin C in the storage units as proceeds from sales in the coin transport cassette 30.

The register apparatus 14 may be a POS register that is operated by a clerk or may be a self-checkout register that is operated by a customer.

Note that, at least one of the two cash settlement apparatuses 11 may be an apparatus that performs only depositing and dispensing processing of a coin. Further, the first banknote handling apparatus 12 and the first coin handling apparatus 13 may be formed separately from the register apparatus 14, and these may be communicably connected to each other.

The POS register apparatus 15 is installed in the checkout counter 10. A clerk manually deposits or dispenses cash to or from a drawer 40, thereby settlement processing of the POS register apparatus 15 is performed.

The depositing and dispensing apparatus 21, the cash management apparatus 25, and the POS management apparatus 26 are installed in a back office 20 of the store. The depositing and dispensing apparatus 21 is communicably connected to each of the cash settlement apparatuses 11 and to the POS register apparatus 15. The depositing and dispensing apparatus 21 dispenses a change fund for being loaded to the cash settlement apparatus 11 and the POS register apparatus 15, or deposits proceeds from sales collected from the cash settlement apparatus 11 and the POS register apparatus 15. The depositing and dispensing apparatus 21 comprises a second banknote handling apparatus 22 that handles a banknote, and a second coin handling apparatus 23 that handles a coin. The second coin handling apparatus 23 is an example of a money handling apparatus. Details of the second coin handling apparatus 23 will be described later.

The cash management apparatus 25 is communicably connected to each of the cash settlement apparatuses 11, to the POS register apparatus 15, to the depositing and dispensing apparatus 21, and to the server apparatus 27 via a local area network (LAN) or the like. The cash management apparatus 25 manages cash stored in each of the cash settlement apparatuses 11, in the POS register apparatus 15, and in the depositing and dispensing apparatus 21. For example, the cash management apparatus 25 manages cash subjected to settlement processing in each of the cash settlement apparatuses 11 and in the POS register apparatus 15, and manages cash given or received between the cash settlement apparatus 11 and the depositing and dispensing apparatus 21, and cash given or received between the POS register apparatus 15 and the depositing and dispensing apparatus 21. Further, the cash management apparatus 25 monitors an operation status of the depositing and dispensing apparatus 21. The cash management apparatus 25 transmits information on cash managed by the cash management apparatus 25, an operation status of the depositing and dispensing apparatus 21 and/or the like to the server apparatus 27. The cash management apparatus 25 acquires timing information to be described later from the server apparatus 27 and controls the second coin handling apparatus 23 such that dispensing processing of a change fund is performed at a timing based on the timing information. Note that, the cash management apparatus 25 may monitor whether the coin transport cassette 30 is attached to the cash settlement apparatus 11 or the depositing and dispensing apparatus 21 to transmit information on a monitoring result to the server apparatus 27. The cash management apparatus 25 may monitor whether the drawer 40 is attached to the POS register apparatus 15 or the depositing and dispensing apparatus 21 to transmit information on a monitoring result to the server apparatus 27.

The POS management apparatus 26 manages the flow of commercial products. The POS management apparatus 26 is communicably connected to the server apparatus 27 via a LAN or the like. The POS management apparatus 26 transmits information on the flow of commercial products and/or the like to the server apparatus 27. Note that, the cash management apparatus 25 and the POS management apparatus 26 may be integrally formed.

The server apparatus 27 is an example of a monitoring apparatus. The server apparatus 27 accumulates and manages information on a cash management state in the cash management apparatus 25, an operation status of the depositing and dispensing apparatus 21, the flow of commercial products managed by the POS management apparatus 26 and/or the like in each store.

The server apparatus 27 has a function of determining a timing of performing dispensing processing of a change fund in the second coin handling apparatus 23 of the depositing and dispensing apparatus 21. As a configuration for realizing this function, the server apparatus 27 comprises a communication unit 271, an operation status grasping unit 272, and a timing determination unit 273.

The operation status grasping unit 272 grasps an operation status of the second coin handling apparatus 23, that is, an execution status of depositing processing of proceeds from sales and dispensing processing of a change fund based on information acquired from the cash management apparatus 25 via the communication unit 271.

The timing determination unit 273 determines a timing at which dispensing processing of a change fund is performed before depositing processing of proceeds from sales in the second coin handling apparatus 23, based on an operation status of the second coin handling apparatus 23 grasped by the operation status grasping unit 272. The timing determination unit 273 grasps a time slot during which depositing processing and dispensing processing are not performed in the second coin handling apparatus 23, and determines a timing of dispensing processing such that dispensing processing is completed before depositing processing of proceeds from sales, in the grasped time slot. The timing determination unit 273 may estimate a time slot during which depositing processing and dispensing processing are not performed, by statistically processing past operation statuses. The timing determination unit 273 may vary timings of dispensing processing for each day of the week or for each second coin handling apparatus 23. Timing information on a timing determined by the timing determination unit 273 is transmitted to the cash management apparatus 25, which is predetermined, via the communication unit 271.

The coin transport cassette 30 is an example of a first cassette or a second cassette. The coin transport cassette 30 is an example of a money transport cassette. The coin transport cassette 30 is configured to be attachable to and detachable from the first coin handling apparatus 13 of the cash settlement apparatus 11, and to be attachable to and detachable from the second coin handling apparatus 23 of the depositing and dispensing apparatus 21. When the coin transport cassette 30 is attached to the first coin handling apparatus 13, the coin transport cassette 30 is configured to be capable of giving or receiving the coin C between the coin transport cassette 30 and the first coin handling apparatus 13. When the coin transport cassette 30 is attached to the second coin handling apparatus 23, the coin transport cassette 30 is configured to be capable of giving or receiving the coin C between the coin transport cassette 30 and the second coin handling apparatus 23. The first coin handling apparatus 13 and the second coin handling apparatus 23 are examples of a specific apparatus. On the other hand, the coin transport cassette 30 is configured such that the coin C therein cannot be taken out when the coin transport cassette 30 is detached from the first coin handling apparatus 13 and the second coin handling apparatus 23. A clerk uses the coin transport cassette 30 to transport the coin C between the first coin handling apparatus 13 and the second coin handling apparatus 23. For example, when a change fund is loaded or when proceeds from sales are collected, a clerk uses the coin transport cassette 30 to transport the coin C between the first coin handling apparatus 13 and the second coin handling apparatus 23. The clerk cannot touch the coin C in the coin transport cassette 30 when transporting the coin C. For this reason, the coin C can be transported in a safe state in terms of security. Note that, it may also be configured such that only authorized persons such as a manager of a store are allowed to open the coin transport cassette 30.

The drawer 40 is configured to be attachable to and detachable from the POS register apparatus 15, and to be attachable to and detachable from the second coin handling apparatus 23 of the depositing and dispensing apparatus 21. For example, when a change fund is loaded or when proceeds from sales are collected, a clerk uses the drawer 40 to transport the coin C between the POS register apparatus 15 and the second coin handling apparatus 23.

### <Configuration of Coin Transport Cassette>

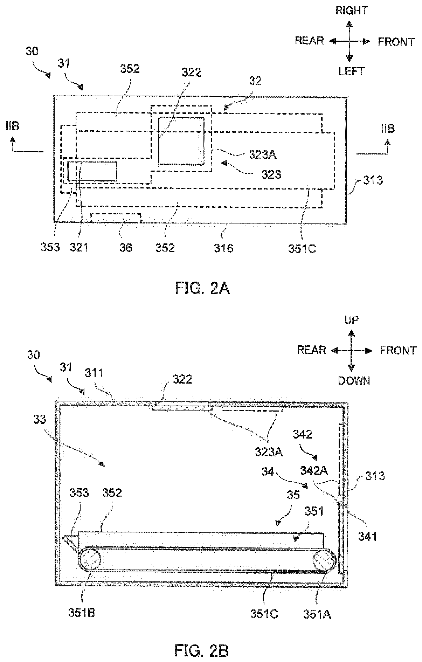

Next, a configuration of the coin transport cassette 30 will be described. FIG. 2A is a top view illustrating a schematic configuration of the coin transport cassette. FIG. 2B is a cross-sectional view taken along IIB-IIB of FIG. 2A. Note that, the arrangement of each configuration of the coin transport cassette 30 or the like may be described using the directions indicated in FIG. 2A and FIG. 2B.

As illustrated in FIG. 2A and FIG. 2B, the coin transport cassette 30 comprises a housing 31, a reception unit 32, a storage unit 33, a discharge unit 34, a feeding unit 35, and a connector 36.

The reception unit 32 receives the coin C from the first coin handling apparatus 13 or the second coin handling apparatus 23. The reception unit 32 comprises a first reception port 321, a second reception port 322, and a reception port opening and closing unit 323.

The first reception port 321 and the second reception port 322 are provided in a upper surface portion 311 of the housing 31. The first reception port 321 is configured to be capable of receiving the coin C from the first coin handling apparatus 13. The second reception port 322 is configured to be capable of receiving the coin C from the second coin handling apparatus 23.

The reception port opening and closing unit 323 opens and closes the first reception port 321 and the second reception port 322. The reception port opening and closing unit 323 comprises a reception port blocking member 323A, and a reception port opening and closing driving unit. The reception port blocking member 323A blocks the first reception port 321 and the second reception port 322. The reception port opening and closing driving unit comprises an opening and closing motor, and an opening and closing mechanism. The opening and closing motor is driven by control of the first coin handling apparatus 13 or the second coin handling apparatus 23. The opening and closing mechanism moves the reception port blocking member 323A frontward and rearward. The opening and closing mechanism is controlled by the driving of the opening and closing motor to move the reception port blocking member 323A frontward and rearward, whereby both the first reception port 321 and the second reception port 322 can be opened or closed simultaneously. Note that, the first reception port 321 and the second reception port 322 may be opened or closed individually.

The storage unit 33 is an inner space of the housing 31. The storage unit 33 stores the coin C received at the reception unit 32.

The discharge unit 34 discharges the coin C stored in the storage unit 33. The discharge unit 34 comprises a discharge port 341, and a discharge port opening and closing unit 342. The discharge port 341 is an example of an opening, and is provided in a front surface portion 313 of the housing 31. The discharge port opening and closing unit 342 opens and closes the discharge port 341. The discharge port opening and closing unit 342 comprises a discharge port blocking member 342A, an opening and closing motor, and an opening and closing mechanism. The opening and closing motor is driven by control of the first coin handling apparatus 13 or the second coin handling apparatus 23. The opening and closing mechanism moves the discharge port blocking member 342A upward and downward. The opening and closing mechanism is controlled by the driving of the opening and closing motor to move the discharge port blocking member 342A upward and downward, whereby the discharge port 341 can be opened and closed.

The feeding unit 35 feeds out the coin C stored in the storage unit 33 such that the coin C is discharged from the discharge unit 34. The feeding unit 35 comprises a transport mechanism 351, side wall portions 352, and a rear wall portion 353.

The transport mechanism 351 comprises a transport motor, a driving pulley 351A, a driven pulley 351B, and a transport belt 351C. The transport motor is driven by control of the first coin handling apparatus 13 or the second coin handling apparatus 23. The driving pulley 351A is provided on a rotating shaft of the transport motor so as to extend rightward and leftward. The driven pulley 351B is supported by a bearing so as to extend rightward and leftward. The transport belt 351C is wound around the driving pulley 351A and the driven pulley 351B. The coin C received through the reception unit 32 is placed on the transport belt 351C. The side wall portions 352 are provided on both sides of the transport belt 351C in the width direction, respectively. The rear wall portion 353 is provided rearward from the transport belt 351C.

The connector 36 is provided so as to be exposed to the outside from a left surface portion 316 of the housing 31. The connector 36 is connected to a connector of the first coin handling apparatus 13 when the coin transport cassette 30 is attached to the first coin handling apparatus 13. The connector 36 is connected to a connector (not illustrated) of the second coin handling apparatus 23 when the coin transport cassette 30 is attached to the second coin handling apparatus 23. When the connector 36 is connected to the connector of the first coin handling apparatus 13 or the second coin handling apparatus 23, power is supplied to the opening and closing motor of the reception port opening and closing unit 323, the opening and closing motor of the discharge unit 34, the transport motor, and/or the like via the connector 36 such that the opening and closing motor of the reception port opening and closing unit 323, the opening and closing motor of the discharge unit 34, the transport motor, and/or the like operate. When the connector 36 is connected to the connector of the first coin handling apparatus 13 or the second coin handling apparatus 23, the coin transport cassette 30 can be controlled by the first coin handling apparatus 13 or the second coin handling apparatus 23 via the connector 36.

### <Configuration of Second Coin Handling Apparatus of Depositing and Dispensing Apparatus>

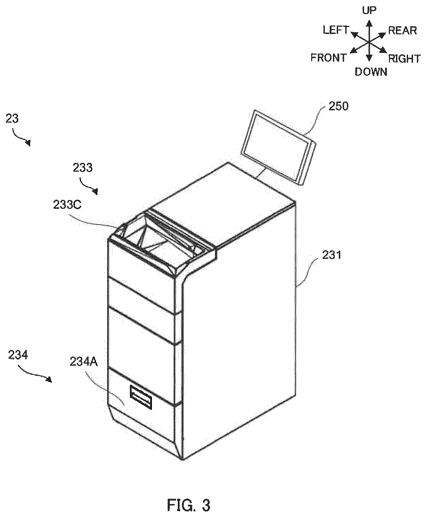

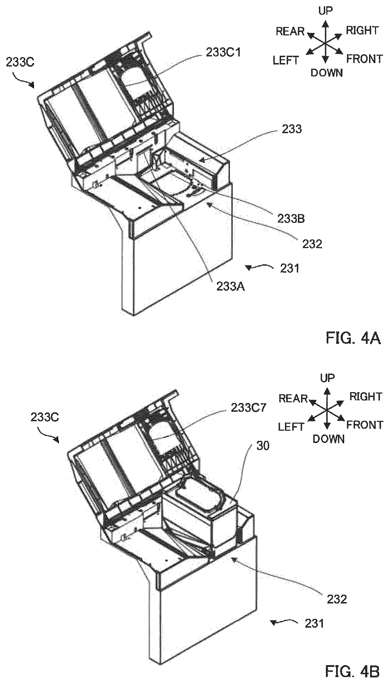

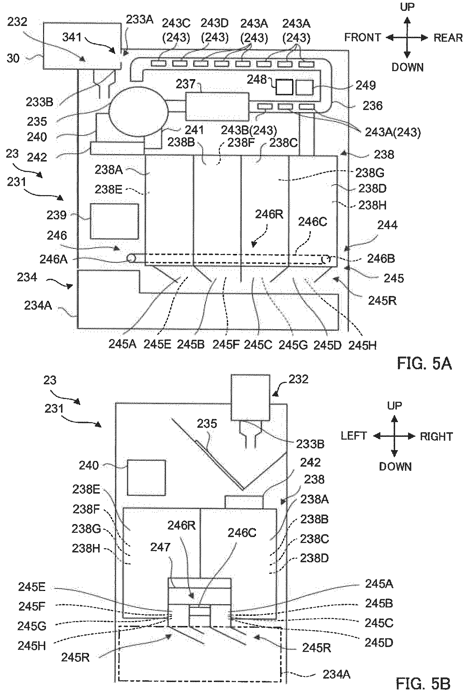

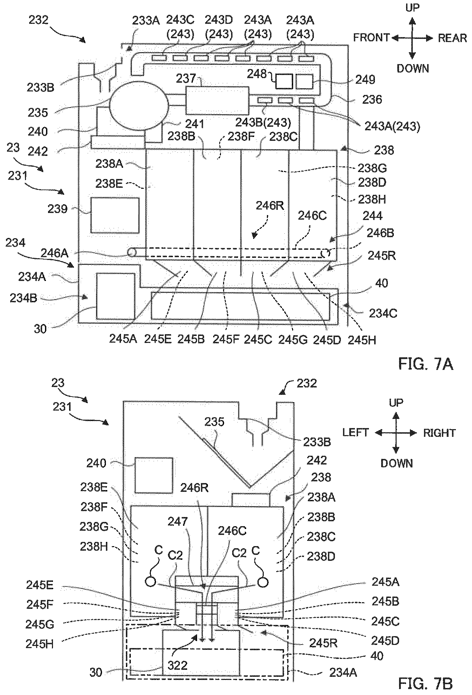

Next, a configuration of the second coin handling apparatus 23 will be described. FIG. 3 is a perspective view of an external appearance of the second coin handling apparatus. FIG. 4A is a perspective view illustrating a state in which a cover of the second coin handling apparatus is opened. FIG. 4B is a perspective view illustrating a state in which the coin transport cassette is attached to the second coin handling apparatus. FIG. 5A is a schematic diagram illustrating an internal configuration of the second coin handling apparatus when viewed from a right side, illustrating a state when proceeds from sales collected by the coin transport cassette are deposited. FIG. 5B is a schematic diagram illustrating the internal configuration of the second coin handling apparatus in the state when the proceeds from sales collected by the coin transport cassette are deposited, when the second coin handling apparatus is viewed from a front side. FIG. 6A is a schematic diagram illustrating the internal configuration of the second coin handling apparatus when viewed from the right side, illustrating a state when a change fund is dispensed into a drawer. FIG. 6B is a schematic diagram illustrating the internal configuration of the second coin handling apparatus in the state when the change fund is dispensed into the drawer, when the second coin handling apparatus is viewed from the front side. FIG. 7A is a schematic diagram illustrating the internal configuration of the second coin handling apparatus when viewed from the right side, illustrating a state when the change fund is dispensed into the coin transport cassette. FIG. 7B is a schematic diagram illustrating the internal configuration of the second coin handling apparatus in the state when the change fund is dispensed into the coin transport cassette, when the second coin handling apparatus is viewed from the front side.

First, a configuration of the second coin handling apparatus 23 visible from the outside will be described. As illustrated in FIG. 3, FIG. 4A and FIG. 4B, the second coin handling apparatus 23 comprises a housing 231, a first cassette attachment unit 232, a depositing unit 233, a dispensing unit 234, and an operation display 250.

The first cassette attachment unit 232 is formed of a downwardly recessed portion provided in a frontward portion of an upper surface portion of the housing 231. As illustrated in FIG. 4B, the first cassette attachment unit 232 is configured to allow the coin transport cassette 30 to be attached to the first cassette attachment unit 232 with the discharge port 341 facing rearward. The first cassette attachment unit 232 is configured such that, when the coin transport cassette 30 is attached to the first cassette attachment unit 232, the connector 36 of the coin transport cassette 30 is connected to a connector of the first cassette attachment unit 232.

The depositing unit 233 is provided in an upper and front portion of the housing 231. That is, the depositing unit 233 is provided on a side on which a clerk stands when operating the second coin handling apparatus 23. The depositing unit 233 is configured such that the coin C can be deposited into the second coin handling apparatus 23. As illustrated in FIG. 4A and FIG. 4B, the depositing unit 233 comprises a first reception port 233A, a second reception port 233B, and a cover 233C.

As illustrated in FIG. 4A, the first reception port 233A is an opening that opens frontward. The first reception port 233A is provided at a position facing the discharge port 341 of the coin transport cassette 30 attached to the first cassette attachment unit 232. The first reception port 233A is configured to be capable of receiving the coin C discharged rearward from the coin transport cassette 30.

The second reception port 233B is an opening that opens downward. As illustrated in FIG. 4B, the second reception port 233B is configured to be covered by the coin transport cassette 30 when the coin transport cassette 30 is attached to the first cassette attachment unit 232. That is, when the coin transport cassette 30 is attached to the first cassette attachment unit 232, it is configured such that the coin C cannot be deposited through the second reception port 233B into the second coin handling apparatus 23.

The cover 233C is configured to turn around a turning shaft provided in the upper surface portion of the housing 231 and extending rightward and leftward, and is configured to be switchable between a closed state in which the cover 233C covers the first reception port 233A and the first cassette attachment unit 232 as illustrated in FIG. 3 and an open state in which the cover 233C does not cover the first reception port 233A and the first cassette attachment unit 232 as illustrated in FIG. 4A and FIG. 4B. The cover 233C is provided with an exposure port 233C1 that exposes the second reception port 233B when the cover 233C is in the closed state.

As illustrated in FIG. 3, the dispensing unit 234 comprises a drawer portion 234A that can be drawn from a lower portion of the housing 231 onto a side of a clerk. A second cassette attachment unit 234B (see FIG. 6A) is provided in a front-side portion in the drawer portion 234A. The coin transport cassette 30 is attached to the second cassette attachment unit 234B. The second cassette attachment unit 234B is configured such that, when the coin transport cassette 30 is attached to the second cassette attachment unit 234B, the connector 36 of the coin transport cassette 30 is connected to a connector of the second cassette attachment unit 234B. A drawer attachment unit 234C (see FIG. 6A) is provided rearward from the second cassette attachment unit 234B in the drawer portion 234A. The drawer 40 is attached to the drawer attachment unit 234C. That is, the second cassette attachment unit 234B is provided at a position different from a position of the drawer attachment unit 234C. Such a configuration makes it possible to attach the coin transport cassette 30 to the second cassette attachment unit 234B when the drawer 40 is attached to the drawer attachment unit 234C.

The operation display 250 is formed of a touch screen-type liquid crystal display apparatus. The operation display 250 functions as an operation unit for inputting information on cash handling and identification of an operator in the second banknote handling apparatus 22 and the second coin handling apparatus 23, and as a display that displays information on cash handling and identification. Note that, the operation display 250 may be formed separately from the depositing and dispensing apparatus 21 or may be integrally formed with the depositing and dispensing apparatus 21. The operation display 250 may also be configured such that the operation unit and the display are provided independently of each other.

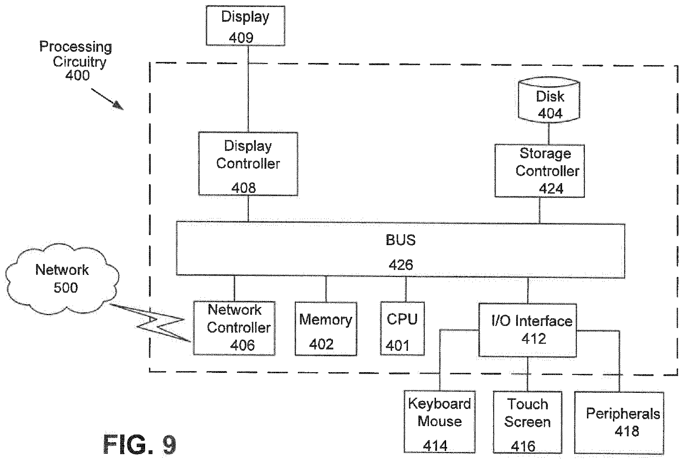

Next, an internal configuration of the second coin handling apparatus 23 will be described. As illustrated in FIG. 5A and FIG. 5B, the second coin handling apparatus 23 further comprises a feeding unit 235, an upper-side transport unit 236, a recognition unit 237, a storage unit 238, a reject unit 239, an overflow storage unit 240, a forged coin storage unit 241, a return unit 242, a plurality of upper chutes 243, a lower-side transport unit 244, a switching unit 247, an identification unit 248, and a control unit 249. Structure of the identification unit 248 and the control unit 249 will be discussed later with respect to processing circuitry 400 in FIG. 9.

The feeding unit 235 is configured to be capable of receiving the coin C deposited from the coin transport cassette 30 via the first reception port 233A and the coin C deposited through the second reception port 233B, feeding out the coin C one by one, and causing the coin C to fall into the return unit 242. As a mechanism to feed out the coin C in the feeding unit 235, it is possible to exemplify a mechanism in which a rotary disk rotating in an inclined state is used and the coin C is picked up one by one by a plurality of projection members on an outer region of a surface of the rotary disk and is fed out.

The upper-side transport unit 236 transports the coin C fed out of the feeding unit 235. The upper-side transport unit 236 is an example of a first transport unit that deposits the coin C in the coin transport cassette 30 into the housing 231, where the coin transport cassette 30 is attached to the first cassette attachment unit 232.

The recognition unit 237 is provided in the upper-side transport unit 236, recognizes denomination, authenticity, fitness, and/or the like of coins deposited through the depositing unit 233, and counts the coins.

The storage unit 238 comprises storage boxes 238A, 238B, 238C, 238D, 238E, 238F, 238G, and 238H (which may be referred to hereinafter as "storage boxes 238A to 238H"). The storage boxes 238A to 238H are configured to be capable of storing the coin C and feeding out the coin C that has been stored. The storage boxes 238A to 238D are provided so as to be side by side in the front-rear direction on the right side in the housing 231. The storage boxes 238E to 238H are provided so as to be side by side in the front-rear direction on the left side in the housing 231. In FIG. 5A, the storage boxes 238E to 238H are hidden behind the storage boxes 238A to 238D. In FIG. 5B, the storage boxes 238B to 238D and 238F to 238H are hidden behind the storage boxes 238A and 238E. Denominations that are stored in the storage boxes 238A to 238H, respectively, are set in advance. As a mechanism to feed out the coin C in the storage boxes 238A to 238H, it is possible to exemplify a mechanism similar to that of the feeding unit 235.

The reject unit 239 stores, as a rejected coin, the coin C recognized not as a coin to be handled or as unrecognizable by the recognition unit 237. The reject unit 239 is configured to be drawable from a side of a front surface of the housing 231 by opening a cover of the housing 231.

The overflow storage unit 240 stores, as an overflow coin, the coin C that cannot be held in a case where the holding number of the coins C in the storage boxes 238A to 238H exceeds a predetermined holding number that has been set. The overflow storage unit 240 is configured to be drawable from the side of the front surface of the housing 231.

The forged coin storage unit 241 stores the coin C recognized as a forged coin by the recognition unit 237. The forged coin storage unit 241 is configured to be drawable from the side of the front surface of the housing 231.

The return unit 242 stores the coin C that has fallen from the feeding unit 235. The return unit 242 is configured to be drawable from the side of the front surface of the housing 231.

The upper chutes 243 are provided downstream of the recognition unit 237 in the upper-side transport unit 236 in the transport direction of the coin C. The upper chutes 243 are provided side by side in a row in the transport direction of the coin C. Of the plurality of upper chutes 243, eight upper chutes 243A are configured to be capable of guiding the coin C to any one of the storage boxes 238A to 238H. Another upper chute 243B is configured to be capable of guiding a rejected coin to the reject unit 239. Yet another upper chute 243C is configured to be capable of guiding an overflow coin to the overflow storage unit 240. One upper chute 243D that is the remaining upper chute 243 is configured to be capable of guiding a forged coin to the forged coin storage unit 241. The upper chutes 243 are normally closed by gates, and guide the coin C to each portion described above by opening the gates.

The lower-side transport unit 244 transports the coin C fed out of the storage unit 238 to the drawer 40 attached to the drawer attachment unit 234C or the coin transport cassette 30 attached to the second cassette attachment unit 234B. The lower-side transport unit 244 is an example of a second transport unit that dispenses the coin C in the housing 231 as a change fund into the coin transport cassette 30 attached to the second cassette attachment unit 234B. The lower-side transport unit 244 comprises a first route forming portion 245 and a second route forming portion 246.

The first route forming portion 245 forms a first route 245R that guides the coin C fed out of the storage unit 238 to the drawer 40 attached to the drawer attachment unit 234C. The first route forming portion 245 comprises drawer chutes 245A, 245B, 245C, 245D, 245E, 245F, 245G, and 245H (which may be referred to hereinafter as "drawer chutes 245A to 245H"). The drawer chutes 245A to 245H are provided one by one downward from the storage boxes 238A to 238H, respectively. In FIG. 6A, the drawer chutes 245E to 245H are hidden behind the drawer chutes 245A to 245D. In FIG. 6B, the drawer chutes 245B to 245D and 245F to 245H are hidden behind the drawer chutes 245A and 245E. The drawer chutes 245A to 245H are configured to be capable of guiding the coin C stored in the storage boxes 238A to 238H to the drawer 40 attached to the drawer attachment unit 234C.

The second route forming portion 246 forms a second route 246R that guides the coin C fed out of the storage unit 238 to the coin transport cassette 30 attached to the second cassette attachment unit 234B. The second route forming portion 246 is provided between a row formed of the drawer chutes 245A to 245D in the front-rear direction and a row formed of the drawer chutes 245E to 245H in the front-rear direction. The second route forming portion 246 comprises a transport motor, a driving pulley 246A, a driven pulley 246B, and a transport belt 246C. The transport motor is driven by control of the control unit 249. The driving pulley 246A is provided on a rotating shaft of the transport motor so as to extend rightward and leftward in a front and lower portion of the housing 231. The driven pulley 246B is received by a bearing so as to extend rightward and leftward in a rear and lower portion of the housing 231. The transport belt 246C is wound around the driving pulley 246A and the driven pulley 246B. The transport belt 246C is configured to be capable of guiding the coin C stored in the storage boxes 238A to 238H to the second reception port 322 of the coin transport cassette 30 attached to the second cassette attachment unit 234B.

The switching unit 247 is driven by control of the control unit 249. The switching unit 247 switches a guide destination of the coin C stored in the storage boxes 238A to 238H to the first route 245R (the drawer chutes 245A to 245H) as illustrated in FIG. 6A and FIG. 6B or the second route 246R (the transport belt 246C) as illustrated in FIG. 7A and FIG. 7B.

The identification unit 248 identifies an operator of the second coin handling apparatus 23. The identification method by the identification unit 248 will be described later.

The control unit 249 controls the entire operation of the second coin handling apparatus 23. The control unit 249 performs control such that the coin C collected from the first coin handling apparatus 13 by the coin transport cassette 30 and the coin C collected from the POS register apparatus 15 by the drawer 40 are deposited as proceeds from sales. The control unit 249 performs control such that the coin C stored in the storage boxes 238A to 238H is dispensed as a change fund into the coin transport cassette 30 or the drawer 40. Such depositing processing of proceeds from sales and dispensing processing of a change fund will be described later. Additional structure of control unit 249 will be discussed later with respect to processing circuitry 400 illustrated in FIG. 9.

### <Basic Operations of Cash Handling System>

### [Depositing Processing of Proceeds From Sales Collected by Coin Transport Cassette in Second Coin Handling Apparatus]

First, as a basic operation of the cash handling system 1, depositing processing of proceeds from sales collected from the first coin handling apparatus 13 by the coin transport cassette 30 in the second coin handling apparatus 23 will be described.

As illustrated in FIG. 4A, a clerk opens the cover 233C to expose the first cassette attachment unit 232. The clerk attaches the coin transport cassette 30, in which the first reception port 321, the second reception port 322 and the discharge port 341 are closed, to the first cassette attachment unit 232 as illustrated in FIG. 4B, FIG. 5A and FIG. 5B. When the coin transport cassette 30 is attached to the first cassette attachment unit 232, the second coin handling apparatus 23 begins to supply power to the coin transport cassette 30 via the connector of the first cassette attachment unit 232. The control unit 249 of the second coin handling apparatus 23 controls the coin transport cassette 30 such that the coin C stored in the coin transport cassette 30 is discharged.

The control unit 249 controls the opening and closing motor of the discharge port opening and closing unit 342 of the coin transport cassette 30 such that the discharge port 341 opens. Next, the control unit 249 controls the transport motor of the feeding unit 35 of the coin transport cassette 30 such that the transport belt 351C rotates, thereby sequentially discharging the coin C stored in the storage unit 33 so as to be fed out of the discharge port 341. When a sensor detects that all of the coin C stored in the storage unit 33 has been discharged, the control unit 249 controls the transport motor of the feeding unit 35 to cause the rotation of the transport belt 351C to end, and controls the opening and closing motor of the discharge port opening and closing unit 342 such that the discharge port 341 is closed.

On the other hand, the coin C fed out of the coin transport cassette 30 passes through the first reception port 233A, and falls into the feeding unit 235 via a feeding mechanism provided in the first reception port 233A on an inner side of the housing 231. The control unit 249 controls the feeding unit 235 and the upper-side transport unit 236 such that the coin C fed out of the coin transport cassette 30 is transported. The coin that is transported is subjected to recognition of denomination, authenticity, fitness, and/or the like by the recognition unit 237. The control unit 249 controls the upper-side transport unit 236 and the gates based on a recognition result by the recognition unit 237 such that the coin C that can be deposited is stored in the storage boxes 238A to 238H for each denomination, and that a rejected coin, an overflow coin, and a forged coin are stored in the reject unit 239, the overflow storage unit 240, and the forged coin storage unit 241, respectively. When the depositing of all of the coin C stored in the coin transport cassette 30 ends, the control unit 249 transmits information on the denominations and number of the coins C, which have been deposited, to the cash management apparatus 25. Thereafter, a clerk detaches the coin transport cassette 30 from the second coin handling apparatus 23, and closes the cover 233C as illustrated in FIG. 3.

### [Depositing Processing of Proceeds From Sales Collected by Drawer in Second Coin Handling Apparatus]

Next, as a basic operation of the cash handling system 1, depositing processing of proceeds from sales collected by the drawer 40 in the second coin handling apparatus 23 will be described. Note that, a difference between the depositing processing of proceeds from sales collected by the drawer 40 and the depositing processing of proceeds from sales collected by the coin transport cassette 30 lies in processing when placing the coin C into the housing 231 of the second coin handling apparatus 23, so that processing after the coin C is placed into the housing 231 will be described in a simplified manner.

In the state illustrated in FIG. 3, the cover 233C is closed so that the coin transport cassette 30 cannot be attached to the first cassette attachment unit 232. In this state, a clerk inserts the coin C collected by the drawer 40 into the exposure port 233C1. The coin C passes through the second reception port 233B, falls into the feeding unit 235 via a feeding mechanism provided in the second reception port 233B on an inner side of the housing 231, and is stored in the storage boxes 238A to 238H, the reject unit 239, the overflow storage unit 240, or the forged coin storage unit 241 based on a recognition result by the recognition unit 237.

### [Dispensing Processing of Change Fund into Coin Transport Cassette and Drawer in Second Coin Handling Apparatus]

Next, as a basic operation of the cash handling system 1, dispensing processing of a change fund into the coin transport cassette 30 and the drawer 40 in the second coin handling apparatus 23 will be described.

A clerk draws the drawer portion 234A of the second coin handling apparatus 23 onto a side of the clerk, and attaches the drawer 40, which is empty, to the drawer attachment unit 234C. Subsequently, the clerk attaches the coin transport cassette 30, which is empty and in which the first reception port 321, the second reception port 322, and the discharge port 341 are closed, to the second cassette attachment unit 234B. As illustrated in FIG. 6A, FIG. 6B, FIG. 7A, and FIG. 7B, the clerk pushes and inserts the drawer portion 234A into the housing 231 to realize a state in which the coin C can be stored in the coin transport cassette 30 and the drawer 40. When the drawer portion 234A is inserted into the housing 231, the second coin handling apparatus 23 begins to supply power to the coin transport cassette 30 via the connector of the second cassette attachment unit 234B. The control unit 249 of the second coin handling apparatus 23 controls the coin transport cassette 30 such that the second reception port 322 of the coin transport cassette 30 opens.

The control unit 249 causes the first reception port 321 and the second reception port 322 to open simultaneously by controlling the opening and closing motor of the reception port opening and closing unit 323 of the coin transport cassette 30 to move the reception port blocking member 323A.

When the first reception port 321 and the second reception port 322 of the coin transport cassette 30 are opened, the control unit 249 performs control such that the coin transport cassette 30 and the drawer 40 are replenished with the coins C of predetermined denominations by a predetermined number.

For example, the control unit 249 controls the storage boxes 238A to 238H and the switching unit 247 such that the coin C fed out of the storage boxes 238A to 238H is guided to the first route 245R (the drawer chutes 245A to 245H) as indicated by arrows C1 in FIG. 6B. The drawer 40 is replenished with the coin C guided to the first route 245R. Further, when the replenishment processing of the drawer 40 with the coin C in the storage boxes 238A to 238H ends, the control unit 249 controls the storage boxes 238A to 238H and the switching unit 247 such that the coin C fed out of the storage boxes 238A to 238H is guided to the second route 246R (the transport belt 246C) as indicated by arrows C2 in FIG. 7B. The control unit 249 further controls the transport motor of the second route forming portion 246 such that the coin transport cassette 30 is replenished with the coin C guided onto the transport belt 246C via the second reception port 322. In this manner, the coin transport cassette 30 and the drawer 40 can be replenished with the coin C in the storage boxes 238A to 238H without detaching the coin transport cassette 30 and the drawer 40 from the second coin handling apparatus 23.

Note that, when the drawer 40 is being replenished with the coin C in at least one arbitrary storage box of the storage boxes 238A to 238H, the control unit 249 may control the switching unit 247 such that the coin transport cassette 30 is replenished with the coin C in all the remaining storage boxes.

When the replenishment processing of the coin transport cassette 30 and the drawer 40 with the coin C ends, the control unit 249 controls the coin transport cassette 30 such that the second reception port 322 of the coin transport cassette 30 is closed.

The control unit 249 controls the opening and closing motor of the reception port opening and closing unit 323 of the coin transport cassette 30 to cause the reception port blocking member 323A to move, thereby closing the first reception port 321 and the second reception port 322 simultaneously.

Thereafter, a clerk draws the drawer portion 234A onto a side of the clerk, and detaches the coin transport cassette 30 and the drawer 40 from the second coin handling apparatus 23.

### <Specific Operation Example of Cash Handling System>

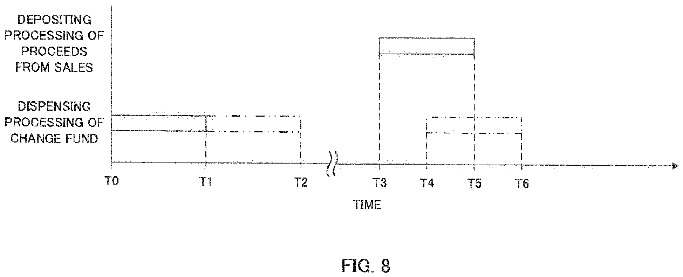

Next, as a specific operation example of the cash handling system 1, depositing processing of proceeds from sales and dispensing processing of a change fund utilizing the coin transport cassette 30 in a predetermined store will be described. FIG. 8 is a timing chart illustrating an exemplary specific operation example of the cash handling system.

The server apparatus 27 grasps an operation status of the second coin handling apparatus 23 of a predetermined store based on information from the cash management apparatus 25 of the store. The server apparatus 27 determines a timing of dispensing processing such that dispensing processing of a change fund is completed before depositing processing of proceeds from sales in a time slot during which the second coin handling apparatus 23 is estimated not to be in operation. The server apparatus 27 transmits timing information on the determined timing to the cash management apparatus 25 of the predetermined store. Note that, the timing of performing dispensing processing determined by the server apparatus 27 may be one timing or a plurality of timings per day. The timing of performing dispensing processing determined by the server apparatus 27 may be on business days or holidays of the store. The server apparatus 27 may transmit timing information based on a grasped operation status daily, for each day of the week of the store, for each predetermined date, for each predetermined season, or for each predetermined period.

The cash management apparatus 25 transmits an instruction signal to the control unit 249 of the second coin handling apparatus 23 such that dispensing processing of a change fund is performed at a timing based on timing information from the server apparatus 27. Note that, each time when the cash management apparatus 25 acquires new timing information from the server apparatus 27, the cash management apparatus 25 preferably transmits an instruction signal based on the timing information. In a case where timing information is transmitted from the server apparatus 27 only for each predetermined period, for example, the cash management apparatus 25 may transmit an instruction signal based on the last acquired timing information to the control unit 249 daily, on business days of the store or on holidays of the store.

The control unit 249 of the second coin handling apparatus 23 performs control such that dispensing processing of a change fund into the coin transport cassette 30 attached to the second cassette attachment unit 234B (hereinafter, this coin transport cassette 30 may be referred to as "first dispensing processing target cassette 30") is performed at a timing based on an instruction signal from the cash management apparatus 25. For example, the control unit 249 causes dispensing processing of a change fund into the first dispensing processing target cassette 30 is performed between a time T0 and a time T1 between which depositing processing of proceeds from sales from the coin transport cassette 30 (hereinafter, may be referred to as "first depositing processing target cassette 30") is not performed as indicated by a solid line in FIG. 8. Note that, the first dispensing processing target cassette 30 may be attached to the second cassette attachment unit 234B by a clerk who takes out the coin transport cassette 30 in which is the last prepared change fund is stored, by a clerk who notices that the first dispensing processing target cassette 30 is not attached to the second cassette attachment unit 234B, or by an attachment apparatus such as a robot. In a case where the first dispensing processing target cassette 30 is not attached to the second cassette attachment unit 234B, the control unit 249 may perform notification control to prompt attachment of the first dispensing processing target cassette 30. The notification prompting the attachment of the first dispensing processing target cassette 30 may be performed by a display on the operation display 250, by an emission apparatus such as a lamp, or by a sound producing apparatus such as a speaker.

When the dispensing processing of a change fund into the first dispensing processing target cassette 30 is performed, the control unit 249 performs control such that a change fund in a money quantity for each denomination set in advance is dispensed. A money quantity may be a number of money (banknotes and coins) or an amount.

Here, in a case where the control unit 249 receives an increase instruction to increase a change fund to be larger than a money quantity for each denomination set in advance before a start of the dispensing processing of a change fund into the first dispensing processing target cassette 30, the control unit 249 may perform control such that a change fund in an amount based on the increase instruction is dispensed.

In this case, the identification unit 248 first causes the operation display 250 to display a login screen for identifying an operator of the second coin handling apparatus 23. As the login screen, it is possible to exemplify a screen that prompts a username and a password to be inputted. The identification unit 248 identifies whether an operator of the second coin handling apparatus 23 is an authorized person allowed to increase a change fund (hereinafter, this authority may be referred to as "increase authority") based on information inputted into the login screen, and transmits an identification result to the control unit 249. Note that, an ID card or biometrics such as a fingerprint, a vein, and an iris may be utilized as identification by the identification unit 248.

In a case where the identification unit 248 identifies the operator as a person having the increase authority, the control unit 249 performs control such that the operation display 250 displays an operation button for increase instructions. When the control unit 249 receives an increase instruction based on an operation of the operation button, the control unit 249 performs control such that a change fund in an amount based on the increase instruction is dispensed. Note that, an increased quantity may be configured to be set arbitrarily by an operator, may be configured to be selected by an operator from a plurality of increased quantities set in advance, may be determined as a fixed quantity, or may be determined in accordance with the occupational post of an operator. It may also be configured such that a physical button for increase instructions is provided in the second coin handling apparatus 23, and that the control unit 249 performs control such that an increase instruction is received based on an operation of the physical button.

In a case where the identification unit 248 does not identify the operator as a person having the increase authority, the control unit 249 may perform control such that a change fund in a money quantity for each denomination set in advance is dispensed without causing the operation display 250 to display the operation button for increase instructions, or may cause the operation display 250 to perform a display to prompt the username and the password to be inputted again.

In a case where the dispensing processing of a change fund into the first dispensing processing target cassette 30 ends and then another coin transport cassette 30 (hereinafter, may be referred to as "second dispensing processing target cassette 30") is attached to the second cassette attachment unit 234B in place of the first dispensing processing target cassette 30, the control unit 249 may perform control such that dispensing processing of a change fund into the second dispensing processing target cassette 30 is performed between the time T1 and a time T2 between which depositing processing of proceeds from sales from the first depositing processing target cassette 30 is not performed as indicated by a two-dot chain line in FIG. 8. The replacement of the coin transport cassette 30 at this time may be performed by a clerk or an attachment apparatus. The amount of the change fund at this time is basically a money quantity for each denomination set in advance, but may be an increased amount based on an identification result by the identification unit 248.

Before the depositing processing of proceeds from sales from the first depositing processing target cassette 30 starts, the control unit 249 may perform control such that dispensing processing with respect to further at least one coin transport cassette 30 (dispensing processing target cassette 30) is performed. With the processing described above, at least one dispensing processing target cassette 30 in which a change fund is stored is prepared.

For example, when a clerk (hereinafter, may be referred to as "depositor") attaches the first depositing processing target cassette 30 to the first cassette attachment unit 232, the control unit 249 performs control such that proceeds from sales in the first depositing processing target cassette 30 are deposited from a time T3 as illustrated by a solid line in FIG. 8. Since at least one dispensing processing target cassette 30 in which a change fund is stored is prepared as described above before the depositing of the proceeds from sales starts, the depositor can bring the dispensing processing target cassette 30, in which a change fund is stored, to the cash settlement apparatus 11 without waiting after attaching the first depositing processing target cassette 30 to the first cassette attachment unit 232.

The control unit 249 may also perform control such that dispensing processing of a change fund into the coin transport cassette 30 attached to the second cassette attachment unit 234B (hereinafter, this coin transport cassette 30 may be referred to as "third dispensing processing target cassette 30") is performed while depositing processing of proceeds from sales of the first depositing processing target cassette 30 is performed as illustrated by a two-dot chain line in FIG. 8. That is, the control unit 249 may perform control such that dispensing processing of a change fund into the third dispensing processing target cassette 30 starts at a time T4 earlier than a time T5 at which the depositing processing from the first depositing processing target cassette 30 ends. The replacement of the dispensing processing target cassette 30 at this time may be performed before or after the depositing processing of proceeds from sales starts. The replacement of the dispensing processing target cassette 30 at this time may be performed by a depositor, by a clerk other than the depositor, or by an attachment apparatus. The amount of the change fund at this time is basically a money quantity for each denomination set in advance, but may be an increased amount based on an identification result by the identification unit 248.

For example, the depositing processing of the first depositing processing target cassette 30, which has started at the time T3, ends at the time T5 earlier than a time T6, and the dispensing processing of the third dispensing processing target cassette 30, which has started at the time T4, ends at the time T6. Note that, the dispensing processing may end earlier than the depositing processing depending on the amounts of the proceeds from sales and the change fund.

Thereafter, the control unit 249 performs control such that depositing processing or dispensing processing is performed in accordance with the attachment of the coin transport cassette 30 to the first cassette attachment unit 232 or the second cassette attachment unit 234B. Depositing processing and dispensing processing may be performed in parallel.

FIG. 9 is a block diagram of processing circuitry that performs computer-based operations in accordance with the present disclosure. FIG. 9 illustrates processing circuitry 400 of identification unit 248 and control unit 249, which is a component of second coin handling apparatus 23.

Processing circuitry 400 is used to control any computer-based and cloud-based control processes, descriptions or blocks in flowcharts can be understood as representing modules, segments or portions of code which include one or more executable instructions for implementing specific logical functions or steps in the process, and alternate implementations are included within the scope of the exemplary embodiments of the present advancements in which functions can be executed out of order from that shown or discussed, including substantially concurrently or in reverse order, depending upon the functionality involved, as would be understood by those skilled in the art. The functionality of the elements disclosed herein may be implemented using circuitry or processing circuitry which may include general purpose processors, special purpose processors, integrated circuits, ASICs ("Application Specific Integrated Circuits"), conventional circuitry and/or combinations thereof which are configured or programmed to perform the disclosed functionality. Processors are processing circuitry or circuitry as they include transistors and other circuitry therein. The processor may be a programmed processor which executes a program stored in a memory. In the disclosure, the processing circuitry, units, or means are hardware that carry out or are programmed to perform the recited functionality. The hardware may be any hardware disclosed herein or otherwise known which is programmed or configured to carry out the recited functionality.

In FIG. 9, the processing circuitry 400 includes a CPU 401 which performs one or more of the control processes discussed in this disclosure. The process data and instructions may be stored in memory 402. These processes and instructions may also be stored on a storage medium disk 404 such as a hard drive (HDD) or portable storage medium or may be stored remotely. Further, the claimed advancements are not limited by the form of the computer-readable media on which the instructions of the inventive process are stored. For example, the instructions may be stored on CDs, DVDs, in FLASH memory, RAM, ROM, PROM, EPROM, EEPROM, hard disk or any other non-transitory computer readable medium of an information processing device with which the processing circuitry 400 communicates, such as a server or computer. The processes may also be stored in network based storage, cloud-based storage or other mobile accessible storage and executable by processing circuitry 400.

Further, the claimed advancements may be provided as a utility application, background daemon, or component of an operating system, or combination thereof, executing in conjunction with CPU 401 and an operating system such as Microsoft Windows, UNIX, Solaris, LINUX, Apple MAC-OS, Apple iOS and other systems known to those skilled in the art.

The hardware elements in order to achieve the processing circuitry 400 may be realized by various circuitry elements. Further, each of the functions of the above described embodiments may be implemented by circuitry, which includes one or more processing circuits. A processing circuit includes a particularly programmed processor, for example, processor (CPU) 401, as shown in FIG. 9. A processing circuit also includes devices such as an application specific integrated circuit (ASIC) and conventional circuit components arranged to perform the recited functions.

In FIG. 9, the processing circuitry 400 may be a computer or a particular, special-purpose machine. Processing circuitry 400 is programmed to execute processing to second control coin handling apparatus 23.

Alternatively, or additionally, the CPU 401 may be implemented on an FPGA, ASIC, PLD or using discrete logic circuits, as one of ordinary skill in the art would recognize. Further, CPU 401 may be implemented as multiple processors cooperatively working in parallel to perform the instructions of the inventive processes described above.

The processing circuitry 400 in FIG. 9 also includes a network controller 406, such as an Ethernet PRO network interface card, for interfacing with network 500. As can be appreciated, the network 500 can be a public network, such as the Internet, or a private network such as a local area network (LAN) or wide area network (WAN), or any combination thereof and can also include Public Switched Telephone Network (PSTN) or Integrated Services Digital Network (ISDN) sub-networks. The network 500 can also be wired, such as an Ethernet network, universal serial bus (USB) cable, or can be wireless such as a cellular network including EDGE, 3G and 4G wireless cellular systems. The wireless network can also be Wi-Fi, wireless LAN, Bluetooth, or any other wireless form of communication that is known. Additionally, network controller 406 may be compliant with other direct communication standards, such as Bluetooth, a near field communication (NFC), infrared ray or other.

The processing circuitry 400 further includes a display controller 408, such as a graphics card or graphics adaptor for interfacing with display 409, such as a monitor. An I/O interface 412 interfaces with a keyboard and/or mouse 414 as well as a touch screen panel 416 on or separate from display 109. I/O interface 412 also connects to a variety of peripherals 418.

The storage controller 424 connects the storage medium disk 404 with communication bus 426, which may be an ISA, EISA, VESA, PCI, or similar, for interconnecting all of the components of the processing circuitry 400. A description of the general features and functionality of the display 409, keyboard and/or mouse 414, as well as the display controller 408, storage controller 424, network controller 406, and I/O interface 412 is omitted herein for brevity as these features are known.

The exemplary circuit elements described in the context of the present disclosure may be replaced with other elements and structured differently than the examples provided herein. Moreover, circuitry configured to perform features described herein may be implemented in multiple circuit units (e.g., chips), or the features may be combined in circuitry on a single chipset.

The functions and features described herein may also be executed by various distributed components of a system. For example, one or more processors may execute these system functions, wherein the processors are distributed across multiple components communicating in a network. The distributed components may include one or more client and server machines, which may share processing, in addition to various human interface and communication devices (e.g., display monitors, smart phones, tablets, personal digital assistants (PDAs)). The network may be a private network, such as a LAN or WAN, or may be a public network, such as the Internet. Input to the system may be received via direct user input and received remotely either in real-time or as a batch process. Additionally, some implementations may be performed on modules or hardware not identical to those described. Accordingly, other implementations are within the scope that may be claimed.

### <Working Effect of Embodiment>

The control unit 249 of the second coin handling apparatus 23 operates such that dispensing processing of a change fund into the first dispensing processing target cassette 30 (second cassette) is performed before depositing processing of proceeds from sales of the first depositing processing target cassette 30 (first cassette) brought by a depositor. For this reason, the depositor can bring the first dispensing processing target cassette 30, in which a change fund is stored, to the cash settlement apparatus 11 without waiting after causing the second coin handling apparatus 23 to start depositing processing of the first depositing processing target cassette 30. Accordingly, it is possible to provide the second coin handling apparatus 23 capable of shortening a waiting time for a change fund to be dispensed.

The control unit 249 performs control such that dispensing processing of a change fund into the third dispensing processing target cassette 30 (third cassette) is performed while depositing processing of proceeds from sales from the first depositing processing target cassette 30 is performed. For this reason, the next change fund can be prepared earlier.

The control unit 249 causes the depositing processing of proceeds from sales from the first depositing processing target cassette 30 brought by a depositor to start after the dispensing processing of a change fund into the first dispensing processing target cassette 30 (second cassette) and dispensing processing of a change fund into the second dispensing processing target cassette 30 (third cassette) attached to the second cassette attachment unit 234B in place of the first dispensing processing target cassette 30 are performed. Accordingly, the second coin handling apparatus 23 is capable of shortening waiting times for more change funds to be dispensed.

The control unit 249 performs control such that a change fund in a money quantity for each denomination set in advance is prepared. Accordingly, a clerk can bring a change fund in an appropriate amount to the cash settlement apparatus 11 without performing an operation of setting an amount of a change fund.

When the control unit 249 receives an increase instruction, the control unit 249 performs control such that a change fund in an amount in accordance with the increase instruction is prepared. Accordingly, a clerk can bring a change fund in an amount larger than a money quantity for each denomination set in advance to the cash settlement apparatus 11 as needed.

In a case where the identification unit 248 identifies an operator, who has issued an increase instruction, as a person having the increase authority, the control unit 249 performs control such that a change fund in an amount in accordance with the increase instruction issued by the operator is prepared. Thus, it is possible to provide the second coin handling apparatus 23 capable of managing money appropriately by limiting persons who are allowed to issue increase instructions.

The second coin handling apparatus 23 performs depositing processing from or dispensing processing into the coin transport cassette 30 capable of giving or receiving the coin C only between the coin transport cassette 30 and the second coin handling apparatus 23 or only between the coin transport cassette 30 and the first coin handling apparatus 13. Accordingly, it is possible to prevent the coin C from being taken out from the coin transport cassette 30 while the coin transport cassette 30 is transported.

The server apparatus 27 determines, based on information from the cash management apparatus 25 of a predetermined store, a timing of dispensing processing such that dispensing processing of a change fund is completed in a time slot during which the second coin handling apparatus 23 of the store is estimated not to be in operation. The server apparatus 27 transmits timing information on the determined timing to the second coin handling apparatus 23. The control unit 249 of the second coin handling apparatus 23 causes dispensing processing of a change fund to be performed at the timing based on the timing information from the server apparatus 27. Even in a case where the operation status of the second coin handling apparatus 23 varies depending on the day of the week, the date (for example, the beginning or end of a month) or the season, the second coin handling apparatus 23 is capable of taking such a status into consideration and performing dispensing processing of a change fund before depositing processing of proceeds from sales based on an appropriate timing determined by the server apparatus 27.

### [Variation of Embodiment]

It goes without saying that the present disclosure is not limited to those indicated in the embodiment described thus far, and the scope of the invention is defined by the appended claims.

For example, the control unit 249 may perform control such that a change fund is dispensed into the drawer 40 (second cassette) attached to the drawer attachment unit 234C (second cassette attachment unit) before depositing processing of proceeds from sales of the coin transport cassette 30. It may also be configured such that a drawer attachment unit for depositing (first cassette attachment unit), to which the drawer 40 in which proceeds from sales are stored can be attached, is provided in the housing 231, and that, before depositing processing of proceeds from sales of the drawer 40, the control unit 249 performs control such that a change fund is dispensed into the coin transport cassette 30 attached to the second cassette attachment unit 234B or performs control such that a change fund is dispensed into the drawer 40 attached to the drawer attachment unit 234C (second cassette attachment unit).

The second coin handling apparatus 23 may not identify an operator having issued an increase instruction, and may increase a change fund whoever the operator is. The second coin handling apparatus 23 may not have a function of increasing a change fund. The second coin handling apparatus 23 may be configured to receive a setting of an amount of a change fund for each dispensing processing.

It may also configured such that the cash management apparatus 25 grasps an operation status of the second coin handling apparatus 23, and that the cash management apparatus 25 determines a timing of dispensing processing of a change fund, which is performed before depositing processing of proceeds from sales. The cash handling system 1 may not have a function of determining a timing of dispensing processing of a change fund. In this case, it may also be configured such that dispensing processing is performed at a timing set in advance every time, or that a clerk can set the timing every time.

It may also be configured such that the second coin handling apparatus 23 is provided with a temporary storage unit that temporarily holds the coin C deposited through the depositing unit 233 before the coin C is stored in the storage unit 238, and that the control unit 249 performs control such that the coin C held in the temporary storage unit is dispensed as a change fund into the dispensing processing target cassette 30. In a case where dispensing processing of a change fund into the third dispensing processing target cassette 30 is performed while the depositing processing of proceeds from sales from the first depositing processing target cassette 30 is performed, the second coin handling apparatus 23 may be configured such that the coin C deposited from the first depositing processing target cassette 30 is not stored in the storage unit 238, but can be dispensed as a change fund into the third dispensing processing target cassette 30.

The money handling apparatus, the money handling system, and the money handling method of the present disclosure may be applied to a configuration in which banknotes as money are handled.

### Industrial Applicability

The present disclosure is applicable to a money handling apparatus, a money handling system, and a money handling method.

### Reference Signs List

1 Cash handling system
10 Checkout counter
11 Cash settlement apparatus
12 First banknote handling apparatus
13 First coin handling apparatus
14 Register apparatus
15 POS register apparatus
20 Back office
21 Depositing and dispensing apparatus
22 Second banknote handling apparatus
23 Second coin handling apparatus
25 Cash management apparatus
26 POS management apparatus
27 Server apparatus
30 Coin transport cassette
31 Housing
32 Reception unit
33 Storage unit
34 Discharge unit
35 Feeding unit
36 Connector
40 Drawer
231 Housing
232 First cassette attachment unit
233 Depositing unit
233A First reception port
233B Second reception port
233C Cover
233C1 Exposure port
234 Dispensing unit
234A Drawer portion
234B Second cassette attachment unit
234C Drawer attachment unit
235 Feeding unit
236 Upper-side transport unit
237 Recognition unit
238 Storage unit
238A, 238B, 238C, 238D, 238E, 238F, 238G, 238H Storage box
239 Reject unit
240 Overflow storage unit
241 Forged coin storage unit
242 Return unit
243, 243A, 243B, 243C, 243D Upper chute
244 Lower-side transport unit
245 First route forming portion
245A, 245B, 245C, 245D, 245E, 245F, 245G, 245H Drawer Chute
245R First route
246 Second route forming portion
246A Driving pulley
246B Driven pulley
246C Transport belt
246R Second route
247 Switching unit
248 Identification unit
249 Control unit
250 Operation display
271 Communication unit
272 Operation status grasping unit
273 Timing determination unit
311 Upper surface portion
313 Front surface portion
316 Left surface portion
321 First reception port
322 Second reception port
323 Reception port opening and closing unit
323A Reception port blocking member
341 Discharge port
342 Discharge port opening and closing unit
342A Discharge port blocking member
351 Transport mechanism
351A Driving pulley
351B Driven pulley
351C Transport belt
352 Side wall portion
353 Rear wall portion
C Coin

## Claims

1. A money handling apparatus (23) to which a cassette (30) is attachable and from which the cassette (30) is detachable, the cassette (30) including a first cassette (30) and a second cassette (30) each being configured to be capable of receiving therein money from the money handling apparatus (23) to store the money therein or giving the stored money to the money handling apparatus (30) when the cassette (30) is attached to the money handling apparatus (23), and not capable of taking out the money therefrom when the cassette (30) is detached from the money handling apparatus (23), the money handling apparatus comprising:
a housing (231) provided with a first cassette attachment unit (232) and a second cassette attachment unit (234B);
a first transport unit (236) that is configured to perform a depositing processing to deposit the money stored in the first cassette (30) as proceeds from sales into the housing (231) when the first cassette (30) is attached to the first cassette attachment unit (232) in the depositing processing;
a second transport unit (244) that is configured to perform a dispensing processing to dispense the money stored in the housing (23) as a change fund from the housing (23) into the second cassette (30) when the second cassette (30) is attached to the second cassette attachment unit (234B) in the dispensing processing; and
a control unit (249) that is configured to control the first transport unit (236) and the second transport unit (244) such that the second transport unit (244) dispenses in the dispensing processing the change fund into the second cassette (30) attached to the second attachment unit (234B) before the first transport unit (236) deposits in the depositing processing the money which the first cassette (30) attached to the first attachment unit (232) is storing therein into the money handling apparatus (23), said control being performed at a timing of the dispensing processing such that the dispensing processing of the change found is completed before the depositing processing of the proceeds from sales in a time slot during which the money handling apparatus (23) is grasped not to be in operation, wherein
the cassette (30) further including a third cassette (30), and
after the dispensing processing to the second cassette (30) is finished, in a case that the third cassette (30) is attached to the second cassette attachment unit (234B) in place of the second cassette (30) while the money stored in the first cassette (30) is deposited from the first cassette (30) into the housing (231), the control unit (249) is configured to control the first transport unit (236) and the second transport unit (244) such that the change fund stored in the housing (231) is started to be dispensed from the housing (231) into the third cassette (30) at a time (T4) earlier than a second time (T5) at which the depositing processing from the first cassette (30) ends.

2. The money handling apparatus (23) according to claim 1, wherein the control unit (249) is configured to control the first transport unit (236) and the second transport unit (244) such that the money stored in the first cassette (30) is deposited from the first cassette (30) into the housing (231) after the change fund stored in the housing (231) is dispensed from the housing (231) into the second cassette (30) and the change fund stored in the housing (231) is dispensed from the housing (231) into the third cassette (30) attached to the second cassette attachment unit (234B) in place of the second cassette (30).

3. The money handling apparatus (23) according to any one of claim 1 or 2, wherein the control unit (249) is configured to control the second transport unit (244) such that the change fund stored in the housing (231) is dispensed from the housing (231) into the second cassette (30) in a money quantity for each denomination that is set in advance.

4. The money handling apparatus (23) according to any one of claims 1 to 3, wherein the first cassette (30) attached to the first cassette attachment unit (232) and the second cassette (30) attached to the second cassette attachment unit (234B) is a money transport cassette (30) comprising an opening (321, 322) which opens when the money transport cassette (30) is attached to a specific apparatus, the money transport cassette (30) being configured to give or receive the money to or from the specific apparatus via the opening.

5. The money handling apparatus (23) according to any one of claims 1 to 4, wherein the control unit (249) is configured to control the first transport unit (236) and the second transport unit (244) such that proceeds from sales are deposited into the housing (231) and that the change fund is dispensed into the second cassette (30), the proceeds from sales being collected into the first cassette (30) by a first commercial product registration apparatus, the change fund being used in a second commercial product registration apparatus.

6. The money handling apparatus (23) according to any one of claims 1 to 5, wherein the first cassette attachment unit (232) and the second cassette attachment unit (234B) are capable of mounting the cassette (30) thereto, respectively.

7. A money handling system (1), comprising:
the money handling apparatus (23) according to any one of claims 1 to 6; and
a monitoring apparatus (27) communicably connected to the money handling apparatus (23),
the monitoring apparatus (27) including:
an operation status grasping unit (272) that is configured to grasp an operation status of the money handling apparatus (23); and
a timing determination unit (273) configured to
determine the timing at which the change fund stored in the housing (231) dispenses from the housing (231) into the second cassette (30) before the money stored in the first cassette (30) deposits from the first cassette (30) into the housing (231), based on the operation status grasped by the operation status grasping unit (272); and
transmit timing information of the timing to the money handling apparatus (23), and
the control unit (249) is configured to control the second transport unit (244) such that the change fund stored in the housing (231) is dispensed from the housing (231) into the second cassette (30) at the timing based on the timing information transmitted from the timing determination unit (273) of the monitoring apparatus (27).

## Patentansprüche

1. Geldhandhabungsvorrichtung (23), an der eine Kassette (30) anbringbar ist und von der die Kassette (30) abnehmbar ist, wobei die Kassette (30) eine erste Kassette (30) und eine zweite Kassette (30) umfasst, die jeweils so konfiguriert sind, dass sie in der Lage sind, darin Geld von der Geldhandhabungsvorrichtung (23) aufzunehmen, um das Geld darin zu speichern, oder das gespeicherte Geld an die Geldhandhabungsvorrichtung (30) abzugeben, wenn die Kassette (30) an der Geldhandhabungsvorrichtung (23) angebracht ist, und nicht in der Lage ist, das Geld daraus zu entnehmen, wenn die Kassette (30) von der Geldhandhabungsvorrichtung (23) abgenommen ist, wobei die Geldhandhabungsvorrichtung umfasst:
ein Gehäuse (231), das mit einer ersten Kassettenbefestigungseinheit (232) und einer zweiten Kassettenbefestigungseinheit (234B) versehen ist;
eine erste Transporteinheit (236), die so konfiguriert ist, dass sie einen Einzahlungsvorgang durchführt, um das in der ersten Kassette (30) gespeicherte Geld als Erlös aus Verkäufen in das Gehäuse (231) einzuzahlen, wenn die erste Kassette (30) bei dem Einzahlungsvorgang an der ersten Kassettenbefestigungseinheit (232) angebracht ist;
eine zweite Transporteinheit (244), die so konfiguriert ist, dass sie eine Ausgabeverarbeitung durchführt, um das in dem Gehäuse (23) gespeicherte Geld als Wechselgeld aus dem Gehäuse (23) in die zweite Kassette (30) auszugeben, wenn die zweite Kassette (30) bei der Ausgabeverarbeitung an der zweiten Kassettenbefestigungseinheit (234B) angebracht ist; und
eine Steuereinheit (249), die so konfiguriert ist, dass sie die erste Transporteinheit (236) und die zweite Transporteinheit (244) so steuert, dass die zweite Transporteinheit (244) bei Ausgabeverarbeitung das gefundene Wechselgeld in die zweite Kassette (30), die an der zweiten Befestigungseinheit (234B) befestigt ist, ausgibt, bevor die erste Transporteinheit (236) bei Einzahlungsverarbeitung das Geld, das die erste Kassette (30), die an der ersten Befestigungseinheit (232) befestigt ist, darin speichert, in die Geldhandhabungsvorrichtung (23) einzahlt, die Steuerung zu einem Zeitpunkt der Ausgabeverarbeitung durchgeführt wird, so dass die Ausgabeverarbeitung des vorgefundenen Wechselgeldes vor der Einzahlungsverarbeitung der Verkaufserlöse in einem Zeitfenster abgeschlossen wird, währenddessen die Geldhandhabungsvorrichtung (23) als nicht in Betrieb ermittelt wird, wobei
die Kassette (30) außerdem eine dritte Kassette (30) enthält, und
nach Beendigung des Ausgabevorgangs an die zweite Kassette (30) in einem Fall, in dem die dritte Kassette (30) anstelle der zweiten Kassette (30) an der zweiten Kassettenbefestigungseinheit (234B) befestigt wird, während das in der ersten Kassette (30) gespeicherte Geld aus der ersten Kassette (30) in das Gehäuse (231) eingelegt wird, die Steuereinheit (249) so konfiguriert ist, dass sie die erste Transporteinheit (236) und die zweite Transporteinheit (244) so steuert, dass die Ausgabe des in dem Gehäuse (231) gespeicherten Wechselgeldes aus dem Gehäuse (231) in die dritte Kassette (30) zu einem Zeitpunkt (T4) begonnen wird, der früher liegt als ein zweiter Zeitpunkt (T5), zu dem der Ablagevorgang aus der ersten Kassette (30) endet.

2. Geldhandhabungsvorrichtung (23) nach Anspruch 1, wobei die Steuereinheit (249) so konfiguriert ist, dass sie die erste Transporteinheit (236) und die zweite Transporteinheit (244) so steuert, dass das in der ersten Kassette (30) gespeicherte Geld aus der ersten Kassette (30) in das Gehäuse (231) abgelegt wird, nachdem der in dem Gehäuse (231) gespeicherte Wechselgeldfonds aus dem Gehäuse (231) in die zweite Kassette (30) ausgegeben wurde und der in dem Gehäuse (231) gespeicherte Wechselgeldfonds in die zweite Kassette (30) ausgegeben wurde. Gehäuse (231) gespeichertes Wechselgeld von der ersten Kassette (30) in das Gehäuse (231) abgegeben wird, nachdem das in dem Gehäuse (231) gespeicherte Wechselgeld von dem Gehäuse (231) in die zweite Kassette (30) abgegeben wird und das in dem Gehäuse (231) gespeicherte Wechselgeld von dem Gehäuse (231) in die dritte Kassette (30) abgegeben wird, die an der zweiten Kassettenbefestigungseinheit (234B) anstelle der zweiten Kassette (30) befestigt ist.

3. Geldhandhabungsvorrichtung (23) nach einem der Ansprüche 1 oder 2, wobei die Steuereinheit (249) so konfiguriert ist, dass sie die zweite Transporteinheit (244) so steuert, dass das im Gehäuse (231) gespeicherte Wechselgeld aus dem Gehäuse (231) in die zweite Kassette (30) in einer Geldmenge für jede Stückelung ausgegeben wird, die im Voraus eingestellt ist.

4. Geldhandhabungsvorrichtung (23) nach einem der Ansprüche 1 bis 3, wobei die erste Kassette (30), die an der ersten Kassettenbefestigungseinheit (232) befestigt ist, und die zweite Kassette (30), die an der zweiten Kassettenbefestigungseinheit (234B) befestigt ist, eine Geldtransportkassette (30) ist, die eine Öffnung (321, 322) aufweist, die sich öffnet, wenn die Geldtransportkassette (30) an einer bestimmten Vorrichtung befestigt ist, wobei die Geldtransportkassette (30) so konfiguriert ist, dass sie das Geld über die Öffnung an die bestimmte Vorrichtung abgibt oder von dieser empfängt.

5. Geldhandhabungsvorrichtung (23) nach einem der Ansprüche 1 bis 4, wobei die Steuereinheit (249) so konfiguriert ist, dass sie die erste Transporteinheit (236) und die zweite Transporteinheit (244) so steuert, dass Verkaufserlöse in das Gehäuse (231) eingelegt werden und dass das Wechselgeld in die zweite Kassette (30) ausgegeben wird, wobei die Verkaufserlöse in der ersten Kassette (30) durch ein erstes kommerzielles Produktregistrierungsgerät gesammelt werden und das Wechselgeld in einem zweiten kommerziellen Produktregistrierungsgerät verwendet wird.

6. Geldhandhabungsvorrichtung (23) nach einem der Ansprüche 1 bis 5, wobei die erste Kassettenbefestigungseinheit (232) und die zweite Kassettenbefestigungseinheit (234B) in der Lage sind, die Kassette (30) jeweils daran zu befestigen.

7. Geldhandhabungssystem (1), umfassend:
die Geldhandhabungsvorrichtung (23) nach einem der Ansprüche 1 bis 6; und
ein Überwachungsgerät (27), das mit dem Geldhandhabungsgerät (23) kommunizierend verbunden ist,
die Überwachungsvorrichtung (27) umfasst:
eine Betriebsstatus-Erfassungseinheit (272), die zum Erfassen eines Betriebsstatus der Geldhandhabungsvorrichtung (23) konfiguriert ist; und
eine Zeitbestimmungseinheit (273), die so konfiguriert ist, dass sie
Bestimmen des Zeitpunkts, zu dem das in dem Gehäuse (231) gespeicherte Wechselgeld aus dem Gehäuse (231) in die zweite Kassette (30) abgegeben wird, bevor das in der ersten Kassette (30) gespeicherte Geld aus der ersten Kassette (30) in das Gehäuse (231) abgegeben wird, basierend auf dem von der Betriebsstatus-Erfassungseinheit (272) erfassten Betriebsstatus; und
die Zeitinformation der Zeitmessung an die Geldhandhabungsvorrichtung (23) zu übertragen, und
die Steuereinheit (249) so konfiguriert ist, dass sie die zweite Transporteinheit (244) so steuert, dass der in dem Gehäuse (231) gespeicherte Wechselfonds aus dem Gehäuse (231) in die zweite Kassette (30) zu dem Zeitpunkt ausgegeben wird, der auf der von der Zeitbestimmungseinheit (273) der Überwachungsvorrichtung (27) übertragenen Zeitinformation basiert.

## Revendications

1. Appareil de manipulation d'argent (23) auquel une cassette (30) peut être fixée et dont la cassette (30) peut être détachée, la cassette (30) incluant une première cassette (30) et une deuxième cassette (30) chacune conçue pour pouvoir recevoir de l'argent provenant de l'appareil de manipulation d'argent (23), qu'elle va alors renfermer, ou pour fournir l'argent qu'elle renferme à l'appareil de manipulation d'argent (30) lorsque la cassette (30) est fixée à l'appareil de manipulation d'argent (23), et ne permettant pas de retirer de l'argent de celle-ci lorsque la cassette (30) est détachée de l'appareil de manipulation d'argent (23), l'appareil de manipulation d'argent comprenant :
un boîtier (231) pourvu d'une première unité de fixation de cassette (232) et d'une deuxième unité de fixation de cassette (234B) ;
une première unité de transport (236) conçue pour réaliser un processus de dépôt visant à déposer, dans le boîtier (231), l'argent renfermé dans la première cassette (30), en tant que produit des ventes, lorsque la première cassette (30) est fixée à la première unité de fixation de cassette (232) lors du processus de dépôt ;
une deuxième unité de transport (244) conçue pour réaliser un processus de distribution visant à distribuer, à la deuxième cassette (30), à partir du boîtier (23), l'argent renfermé dans le boîtier (23), en tant que fonds de caisse, lorsque la deuxième cassette (30) est fixée à la deuxième unité de fixation de cassette (234B) au cours du processus de distribution ; et
une unité de commande (249) conçue pour commander la première unité de transport (236) et la deuxième unité de transport (244) de façon que la deuxième unité de transport (244) distribue, au cours du processus de distribution, le fonds de caisse à la deuxième cassette (30) fixée à la deuxième unité de fixation (234B) avant que la première unité de transport (236) ne dépose dans l'appareil de manipulation d'argent (23), au cours du processus de dépôt, l'argent que renferme la première cassette (30) fixée à la première unité de fixation (232), ladite commande étant réalisée à un moment du processus de distribution de façon que le processus de distribution du fonds de caisse soit achevé avant le processus de dépôt du produit des ventes dans un créneau horaire au cours duquel il est établi que l'appareil de manipulation d'argent (23) n'est pas en service ; étant entendu que
la cassette (30) comprend en outre une troisième cassette (30), et
après que le processus de distribution dans la deuxième cassette (30) est terminé, dans un cas où la troisième cassette (30) est fixée à la deuxième unité de fixation de cassette (234B) à la place de la deuxième cassette (30) tandis que l'argent renfermé dans la première cassette (30) est déposé dans le boîtier (231) à partir de la première cassette (30), l'unité de commande (249) est conçue pour commander la première unité de transport (236) et la deuxième unité de transport (244) de façon que le fonds de caisse renfermé dans le boîtier (231) commence à être distribué à la troisième cassette (30) à partir du boîtier (231) à un moment (T4) antérieur à un deuxième moment (T5) auquel le processus de dépôt à partir de la première cassette (30) se termine.

2. Appareil de manipulation d'argent (23) selon la revendication 1, dans lequel l'unité de commande (249) est conçue pour commander la première unité de transport (236) et la deuxième unité de transport (244) de façon que l'argent renfermé dans la première cassette (30) soit distribué au boîtier (231) à partir de la première cassette (30) après que le fonds de caisse renfermé dans le boîtier (231) a été distribué à la deuxième cassette (30) à partir du boîtier (231) et que le fonds de caisse renfermé dans le boîtier (231) a été distribué à partir du boîtier (231) à la troisième cassette (30) fixée à la deuxième unité de fixation de cassette (234B) à la place de la deuxième cassette (30).

3. Appareil de manipulation d'argent (23) selon l'une quelconque des revendications 1 et 2, dans lequel l'unité de commande (249) est conçue pour commander la deuxième unité de transport (244) de façon que le fonds de caisse renfermé dans le boîtier (231) soit distribué à la deuxième cassette (30) à partir du boîtier (231) selon un montant propre à chaque dénomination qui est défini à l'avance.

4. Appareil de manipulation d'argent (23) selon l'une quelconque des revendications 1 à 3, dans lequel la première cassette (30) fixée à la première unité de fixation de cassette (232) et la deuxième cassette (30) fixée à la deuxième unité de fixation de cassette (234B) sont une cassette de transport d'argent (30) comprenant une ouverture (321, 322) qui s'ouvre lorsque la cassette de transport d'argent (30) est fixée à un appareil spécifique, la cassette de transport d'argent (30) étant conçue pour fournir de l'argent audit appareil spécifique ou pour recevoir de l'argent de celui-ci par l'intermédiaire de l'ouverture.

5. Appareil de manipulation d'argent (23) selon l'une quelconque des revendications 1 à 4, dans lequel l'unité de commande (249) est conçue pour commander la première unité de transport (236) et la deuxième unité de transport (244) de façon que le produit des ventes soit déposé dans le boîtier (231) et que le fonds de caisse soit déposé dans la deuxième cassette (30), le produit des ventes étant collecté dans la première cassette (30) par un premier appareil d'enregistrement de produits commerciaux, le fonds de caisse étant utilisé dans un deuxième appareil d'enregistrement de produits commerciaux.

6. Appareil de manipulation d'argent (23) selon l'une quelconque des revendications 1 à 5, dans lequel la première unité de fixation de cassette (232) et la deuxième unité de fixation de cassette (234B) sont aptes à un montage respectif de la cassette (30) sur celles-ci.

7. Système de manipulation d'argent (1), comprenant :
l'appareil de manipulation d'argent (23) selon l'une quelconque des revendications 1 à 6, et
un appareil de surveillance (27) raccordé avec faculté de communication à l'appareil de manipulation d'argent (23) ;
l'appareil de surveillance (27) comprenant :
une unité d'établissement d'état de fonctionnement (272) conçue pour établir l'état de fonctionnement de l'appareil de manipulation d'argent (23), et
une unité de détermination de moment (273) conçue pour
déterminer le moment auquel le fonds de caisse renfermé dans le boîtier (231) est distribué à partir du boîtier (231) à la deuxième cassette (30) avant que l'argent renfermé dans la première cassette (30) ne soit déposé dans le boîtier (231) à partir de la première cassette (30), en fonction de l'état de fonctionnement établi par l'unité d'établissement d'état de fonctionnement (272), et
transmettre des informations concernant le moment à l'appareil de manipulation d'argent (23) ; et
l'unité de commande (249) étant conçue pour commander la deuxième unité de transport (244) de façon que le fonds de caisse renfermé dans le boîtier (231) soit distribué à la deuxième cassette (30) à partir du boîtier (231) audit moment, en fonction des informations concernant le moment transmises par l'unité de détermination de moment (273) de l'appareil de surveillance (27).
